# EUROPEAN PATENT APPLICATION

(11) **EP 4 099 515 A1**
(43) Date of publication of application: **07.12.2022**
(21) Application number: 22175362.7
(22) Date of filing: 25.05.2022
(51) Int. Cl.: H01R 13/627, B60L 53/16, H01R 13/641

(54) **ELECTRICAL CONNECTOR CASE UNIT**

(30) Priority: 03.06.2021 IT 202100014450
(71) Applicant: GEWISS S.p.A., 24069 Cenate Sotto (Bergamo) (IT)
(72) Inventor: BOSATELLI, Fabio Livio, 24069 Cenate Sotto (Bergamo) (IT)
(74) Representative: Forattini, Amelia

(57) **Abstract**

An electrical connector case unit (1) having a movable connector, or plug (3), and a supporting structure (2) adapted to receive the movable connector; a contoured seat (4) adapted to receive a head (5) of the movable connector; the head of the movable connector has a pair of recesses (6) arranged opposite to one another; springs arranged inside the contoured seat in positions that correspond to the recesses when the head of the movable connector is inserted in the contoured seat.

## Description

The present invention relates to an electrical connector case unit.

More particularly, the present invention relates to a case unit adapted to receive connector devices for charging electric vehicles.

The present unit is compliant with the EN62196 Type 2 standard for power levels up to 22 kW (32A 480 V) and ensures an IP XXD rating and an IP55 seal (when the movable connector is inserted).

As is known, batteries of electric vehicles are charged by connection to adapted fixed or movable outlets connected to the electrical grid.

Currently commercially available Type 2 connectors are used in outlets (wallboxes) for charging vehicles in public and private spaces, typically in a garage, and in charging stations of private, commercial and public parking spaces.

The connectors must comply with the EN62196 standard, which mandates IP XXD protection on the "active contact holes" (phases and neutral), provided by means of systems for exclusion from the electrical mains or by means of shutters.

The EN62196 standard also provides for locking the movable outlet in the outlet, if the outlet is live.

For that purpose, currently commercially available outlets have various and separate mechanisms in order to comply with the various protection and safety functions.

Case units are also known, having the function of supporting and protecting the Type 2 movable plug.

Such case units are normally fixed to the wall or other supporting surface of the charging station and are meant to protect the movable outlet when not in use.

US2015/0249307A1 discloses an electrical connector assembly including an inlet assembly and a plug assembly. The connector assembly has an active locking device for retaining the plug assembly in the inlet assembly. A secondary locking device temporarily retains the plug assembly in the inlet assembly prior to activation of the active locking device. The assembly is conceived for locking the mobile connector when inserted into the inlet while in use, in order to prevent the mobile connector from being extracted from the inlet, causing the sudden power cut during the charging phase, thereby ensuring the safety of the user and the vehicle. US2015/0249307A1 does not describe a case unit for protecting a plug when not in use.

US9011172B2 discloses a retention mechanism for use in electrical connectors used with common portable electronics, such as mobile phones. The mechanism has a pair of spring arm retention features in a connector receptacle engageable with a corresponding pair of recessed retention features in a connector tab and backup spring members for reducing stress within the spring arms during insertion of the tab and/or lubricating members for lubricating the retention mechanism. The backup spring is positioned adjacent an outer-facing surface or extends laterally outward from the spring arms so that deflection of the spring arms displaces the backup spring reducing stresses within each arm and/or increasing the retention force on the connector tab. US9011172B2 does not describe a case unit for protecting a plug.

EP3812200A1 discloses a socket for charging electric vehicles, such as in an IEC 62196 Type 2 connector. The connector has a cover adapted to close the front opening and provided with a lock having a lever which has two operating positions: an open position and a closed position; in the closed position, the lever engages a member for locking the shutters, preventing the lifting and opening of the cover. EP3812200A1 does not describe a case unit for protecting a plug when not in use.

The aim of the present invention is to provide an improved case unit particularly for Type 2 movable connectors.

Within the scope of this aim, an object of the invention is to provide a case unit that allows the repositioning of the movable connector when it is not being used, ensuring the IP55 rating.

A further object of the invention is to provide a case unit with a locking system that allows the user to understand when the connector is inserted correctly.

A further object of the invention is to provide a case unit that is particularly useful in I-CON charging systems for electric vehicles with private access, for the repositioning of the movable connector.

A further object of the present invention is to provide a case unit which, by virtue of its particular constructive characteristics, is capable of giving the greatest assurances of reliability and safety in use.

This aim and these and other objects which will become better apparent hereinafter are achieved by an electrical connector case unit comprising a movable connector and a supporting structure adapted to receive said movable connector; said case unit comprising a contoured seat adapted to receive a head of said movable connector; said case unit being characterized in that said head of the movable connector comprises a pair of recesses arranged opposite to one another; said case unit comprising springs arranged inside said contoured seat in positions that correspond to said recesses when said head of said movable connector is inserted in said contoured seat

Further characteristics and advantages will become better apparent from the description of preferred but not exclusive embodiments of the invention, illustrated by way of non-limiting examples in the accompanying drawings, wherein:

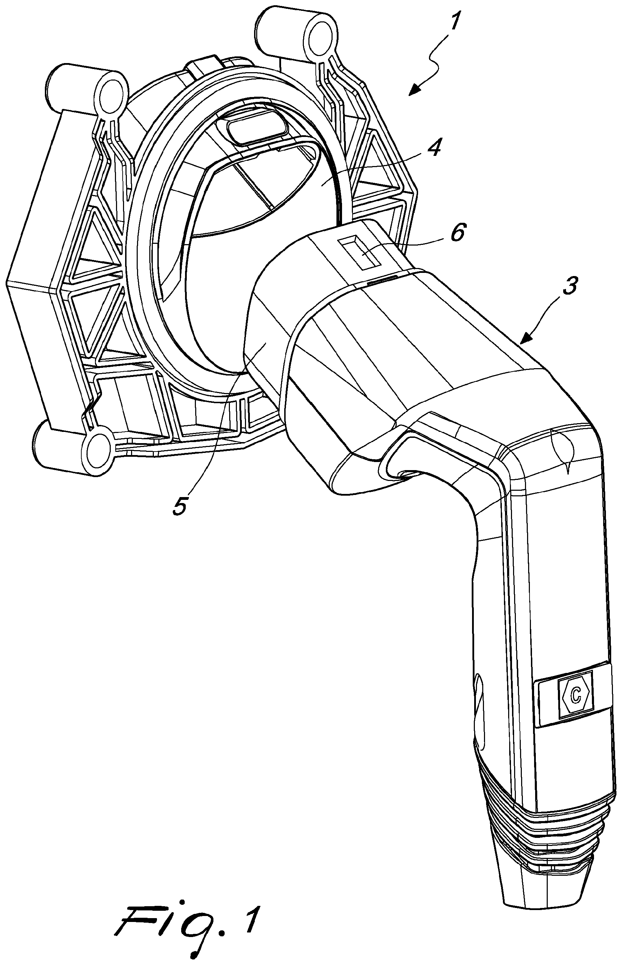

Figure 1 is a perspective view of a movable outlet of a Type 2 connector and of the case unit according to the present invention;

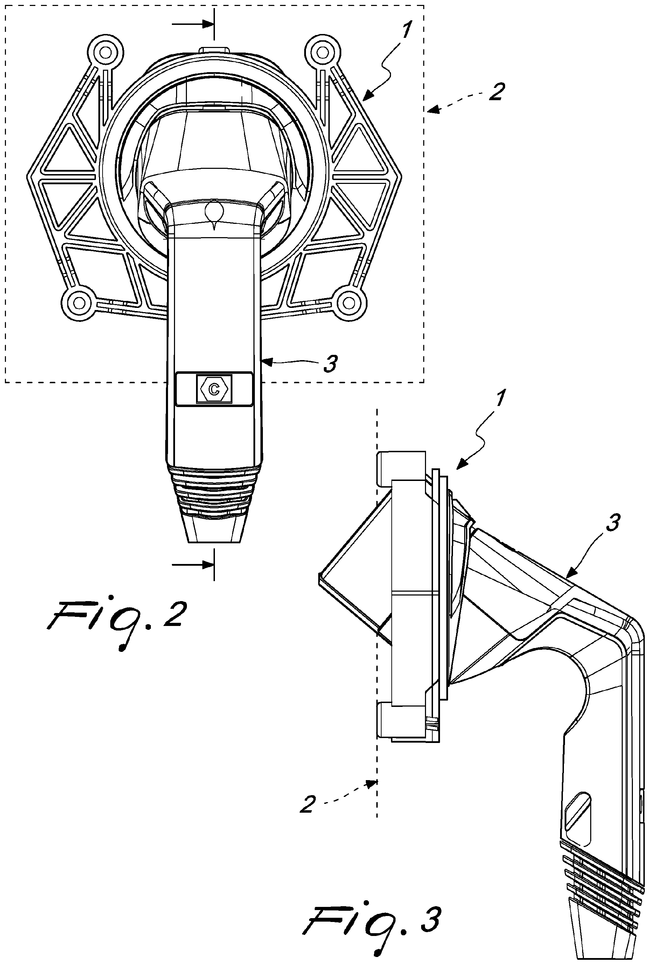

Figure 2 is a front view of the movable outlet inserted in the case unit;
Figure 3 is a side view of the movable outlet inserted in the case unit;

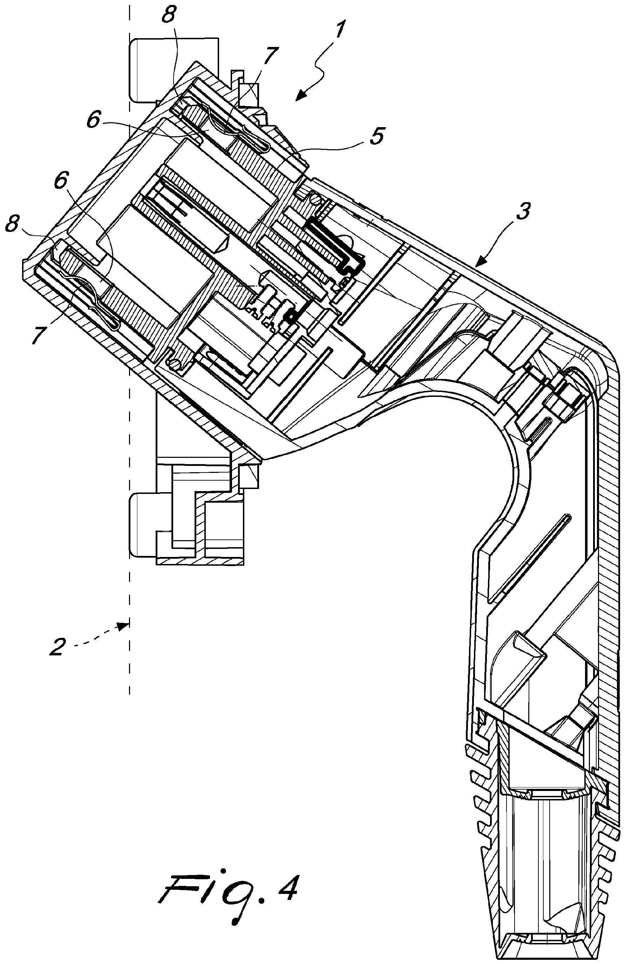

Figure 4 is a sectional side view of the movable outlet inserted in the case unit;

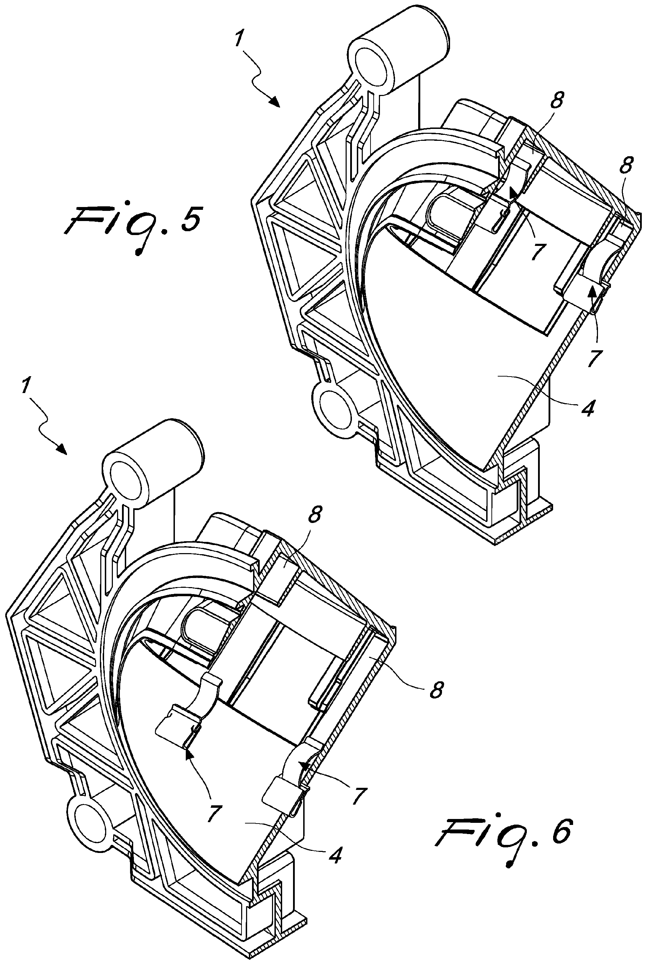

Figure 5 is a cutout perspective view of the case unit;
Figure 6 is a partially exploded cutout perspective view of the case unit;
Figure 7 is a partially sectional side view of the movable outlet inserted in the case unit;
Figure 8 is a view, similar to the preceding one, showing the step of extraction or insertion of the movable outlet.

With reference to the cited figures, the case unit according to the invention, generally designated by the reference numeral 1, is configured to be applied to a supporting structure 2 of a charging station, not visible in the figures, which is adapted to receive a movable connector, or plug, 3.

The case unit 1 includes a contoured seat 4 adapted to receive a head 5 of the movable connector 3.

The head 5 of the movable connector 3 includes a pair of recesses 6 arranged in mutually opposite positions.

According to the present invention, the case unit 1 includes a pair of springs 7 arranged inside the contoured seat 4 in such a position as to match the position of the recesses 6 when the movable connector 3 is inserted in the case and the head 5 is inserted up to the end of the contoured seat 4.

Advantageously, the springs 7 are fitted diametrically inside the contoured seat 4 by pressing, on adapted ribs 8 formed in the contoured seat 4.

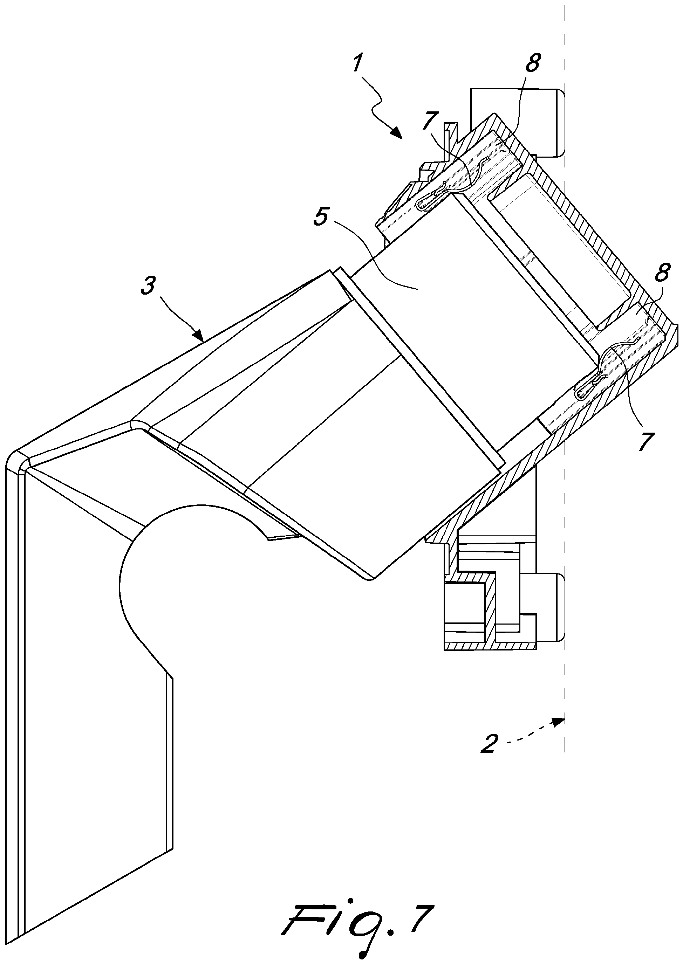

With particular reference to Figure 7, both springs 7, pushed by the sliding of the movable connector 3 on their surface, bend, allowing the insertion thereof.

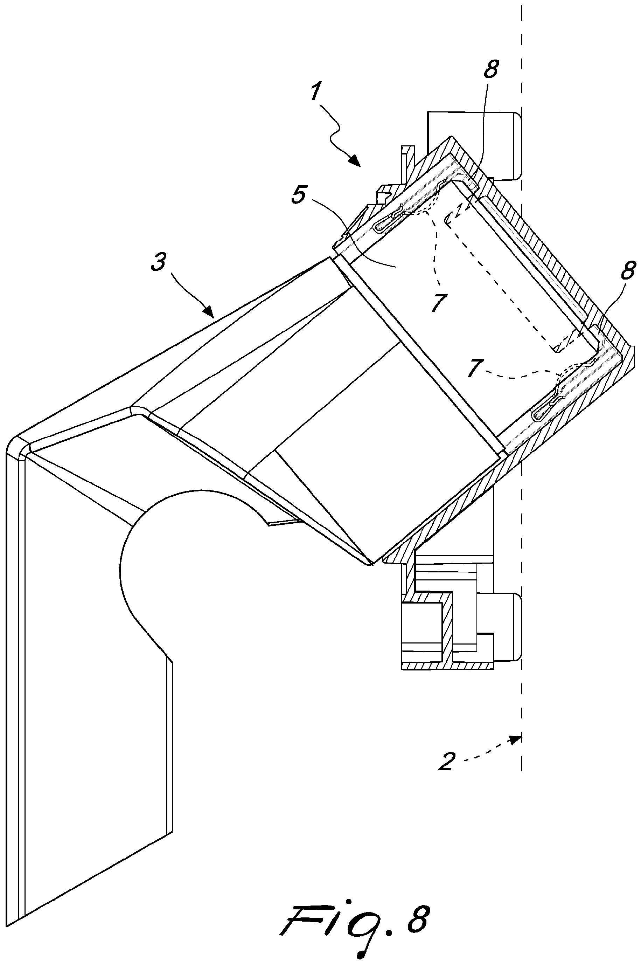

At the end of insertion, the springs 7 recover the initial position and are arranged inside the recesses 6 of the movable connector 3, locking it, as can be seen in Figure 8.

In a manner similar to what occurs during insertion, both springs 7, pushed by the sliding of the movable connector 3 on their surface, bend, allowing the extraction of the movable connector.

The case unit 1 with springs 7 according to the invention is fixed to an I-CON charging system for electric vehicles with private access by means of screws and threaded posts which are part of the system itself.

Appropriate gaskets, interposed between the contoured seat 4 and the supporting structure 2, ensure at least an IP55 seal between the case and the charging system of the electric vehicle.

The IP55 protection rating relates to protection against the entry of dust and against water jets.

The case unit according to the invention provides a passive locking system that retains the plug by acting by friction on the side walls of the connector.

In practice it has been found that the invention achieves the intended aim and objects, providing a flush-mount case with springs for Type 2 movable connectors, which can be integrated within I-CON charging systems for electric vehicles with private access, in order to store the movable connector.

The springs of the case have a minimal space occupation and, once installed by pressing inside the case, ensure the positioning of the movable connector without compromising the IP rating of the device.

The spring-loaded case unit according to the present invention constitutes a substantial improvement over cases for Type 2 mobile connectors known so far.

The spring-loaded case unit according to the present invention allows repositioning the movable connector when it is not used, ensuring the IP55 rating.

Advantageously, the present invention provides a structure able to house the mobile connector when not in use, guaranteeing an appropriate mechanical protection to the plug, for example preventing shocks and crushing by moving vehicles.

The unit also provides protection against atmospheric agents, such as dust and water, when the connector is in not used.

The unit according to the invention allows the user to safely store the plug of the charging cord assembly when not in use.

## Claims

1. An electrical connector case unit comprising a movable connector and a supporting structure adapted to receive said movable connector; said case unit comprising a contoured seat adapted to receive a head of said movable connector; said case unit being **characterized in that** said head of the movable connector comprises a pair of recesses arranged opposite to one another; said case unit comprising springs arranged inside said contoured seat in positions that correspond to said recesses when said head of said movable connector is inserted in said contoured seat.

2. The case unit according to claim 1, **characterized in that** it comprises ribs formed in said contoured seat; said springs being fitted diametrically inside said contoured seat, by pressure on said ribs.

3. The case unit according to claim 1, **characterized in that** said springs are configured to be pushed by a sliding of said movable connector along said springs; said spring bending allowing the insertion thereof; in an inserted position of said connector into said contoured seat, said springs being arranged into said recesses of said movable connector, locking said connector; said connector being allowed to be extracted by pulling the connector which bends said springs.

4. The case unit according to claim 1, **characterized in that** said contoured seat is associated with an I-CON charging system for electric vehicles with private access, by means of screws and threaded posts.

5. The case unit according to claim 1, **characterized in that** it comprises gaskets interposed between said contoured seat and said supporting structure, providing at least an IP55 seal between said case unit and an electric vehicle charging system.
